# EUROPÄISCHE PATENTSCHRIFT

(11) **EP 0 617 041 B1**
(45) Veröffentlichungstag und Bekanntmachung des Hinweises auf die Patenterteilung: **20.10.1999**
(21) Anmeldenummer: 94103596.6
(22) Anmeldetag: 09.03.1994
(51) Int. Cl.: C07F 9/6574, C08K 5/527

(54) **Neue zyklische Phosphorigsäureester, Verfahren zu deren Herstellung sowie deren Verwendung**
Cyclic phosphorous acid esters, process for their preparation and their use
Esters cycliques de l'acide phosphoreuse, procédé de leur préparation et leur utilisation

(30) Priorität: 22.03.1993 DE 4309141
(43) Veröffentlichungstag der Anmeldung: 28.09.1994
(73) Patentinhaber: BAYER AG, 51368 Leverkusen (DE)
(72) Erfinder: Brandt, Heinz-Dieter, Dr., D-47800 Krefeld (DE); Buysch, Hans-Josef, Dr., D-47809 Krefeld (DE); Müller, Harald, Dr., D-41539 Dormagen (DE); Schrage, Heinrich, Dr., D-47800 Krefeld (DE)

(56) Entgegenhaltungen:
- EP-A- 0 009 115
- EP-A- 0 213 639
- EP-A- 0 569 328
- CHEMICAL ABSTRACTS, vol. 101, no. 9, 1984, Columbus, Ohio, US; abstract no. 72820u, & PHOSPHORUS SULFUR, Bd.19, Nr.1, 1984 Seiten 1 - 10 P.A. ODORISIO ET AL

## Beschreibung

Die vorliegende Erfindung betrifft neue zyklische Phosphorigsäureester, ein Verfahren zu deren Herstellung sowie die Verwendung von Phosphorigsäureestern in organischen Isocyanaten als Stabilisator, gegen Verfärbung stabilisierte, organische Isocyanate, die Phosphorigsäureester enthalten sowie ein Verfahren zur Herstellung der stabilisierten, organischen Isocyanate durch Vermischen der Isocyanate mit den Phosphorigsäureestern und gegebenenfalls phenolischen Verbindungen, gegebenenfalls bei erhöhten Temperaturen.

Organische Isocyanate bzw. Polyisocyanate haben für die Herstellung von Polyurethan-kunststoffen hohe Bedeutung erlangt. So werden z.b. organische Polyisocyanate mit Polyolen zur Herstellung von Schaumstoffen, Fasern, Filmen, Elastomeren und Lacken umgesetzt.

Organische Polyisocyanate neigen jedoch bei Lagerung zur Verfärbung. Diese Eigenschaft ist besonders ausgeprägt, wenn die Lagerung bei höheren Temperaturen erfolgt, z.B. für eine homogene Umsetzung mit Reaktionspartnern wie z.B. Polyetherpolyolen, Polyesterpolyolen oder Polyglykolen zu Polyurethanen. Bei der Polymerherstellung muß die Reaktion gegebenenfalls bei höheren Temperaturen durchgeführt werden. auch dabei wird beboachtet, daß die Isocyanate sich sehr schnell verfärben, wen keine Stabilisierung vorgenommen wurde. Häufig jedoch kommt es auch während der Lagerung von organischen Polyisocyanaten bei tiefen Temperaturen zu Verfärbungserscheinungen.

Es wurde bereits vorgeschlagen, verschiedene Stabilisatoren organischen Isocyanaten zuzusetzen, um die Verfärbungsneigung zu verringern. Bekannte Stabilisatoren sind sterisch gehinderte Phenole, Dialkyldiphenylamine, Phenothiazine, Phosphite bzw. Gemische von Vertretern aus diesen Substanzklassen (US-A 3 715 301, US-A 4 064 157, DT-OS 1 668 275, DT-AS 1 618 845, EP-A 445 602).

Der erreichte Stabilisierungseffekt mit den bekannten Stabilisatoren ist jedoch in keiner Weise befriedigend. Die Verfärbungsneigung der organischen Polyisocyanate wird nur unzureichend verhindert.

Zum Teil versagen die bekannten Stabilisatoren bei niedrigen, zum Teil bei erhöhten Temperaturen oder insgesamt.

Cyclische Phosphorigsäureester sind außerdem bekannt aus Chemical Abstracts, Vol. 101, No. 9, 1984, Columbus, Ohio, US; Abstract No. 72820u und aus EP 0 569 328. Die in EP 569 328 beschriebenen cyclischen Phosphorsäureester dienen zur Stabilisierung von organischem Material gegen oxidativen thermischen oder lichtinduzierten Abbau.

Aufgabe war es daher, Stabilisatoren zur Verfügung zu stellen, die über einen weiten Temperaturbereich eine Verfärbung von organischen Isocyanaten/Polyisocyanaten nachhaltig über einen längeren Zeitraum vollständig verhindern.

Überraschenderweise konnte diese Aufgabe mit neuen wie auch bekannten Phosphorigsäureestern gelöst werden.

Gegenstand der Erfindung sind neue zyklische Phosphorigsäureester der Formel (I) 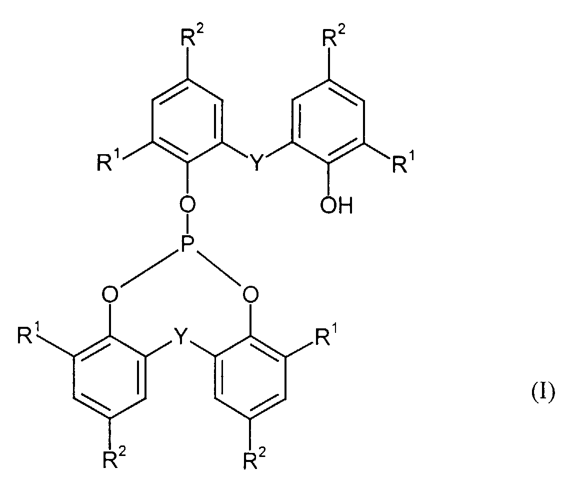 worin
- R¹ und R²: verschieden sind und einen Alkylrest mit 1 bis 9 Kohlenstoffatomen, einen Cycloalkylrest mit 5 bis 6 Kohlenstoffatomen, einen Aralkylrest mit 7 bis 9 Kohlenstoffatomen oder einen Arylrest mit 6 bis 10 Kohlenstoffatomen und R' außerdem einen Wasserstoffrest und
- Y: eine einfache Bindung, ein Schwefelatom oder einen Rest -CHR³- darstellen, wobei
R³ für ein Wasserstoffatom, einen Alkylrest mit 1 bis 6 Kohlenstoffatomen, einen Cyclohexenylrest oder Cyclohexylrest steht.

Ein weiterer Gegenstand der Erfindung ist ein Verfahren zur Herstellung der neuen zyklischen Phosphorigsäureester, welches dadurch gekennzeichnet ist, daß Bisphenole der Formel (II) 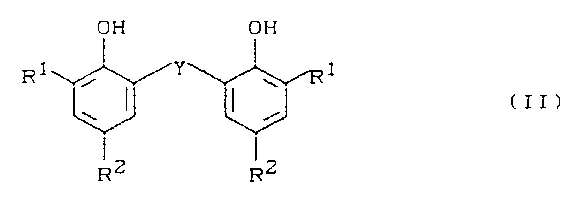 worin
- R¹, R² und Y: dieselbe Bedeutung haben wie oben,
mit Phosphorigsäureestern der Formel (III)

PW₃ (III)

worin
- W: ein Halogenatom oder OR⁷ mit R⁷ = C₁- bis C₁₅-Alkylrest oder C₆- bis C₁₀-Arylrest bedeutet,
im Molverhältnis (II)/(III) wie 3 bis 1,3/1, vorzugsweise wie 2,8 bis 1,5/1, besonders bevorzugt wie 2,5 bis 1,7/1, ganz besonders bevorzugt wie 2,2 bis 1,8/1,
umgesetzt werden.

Die zyklischen Phosphorigsäureester der Formel (IX) 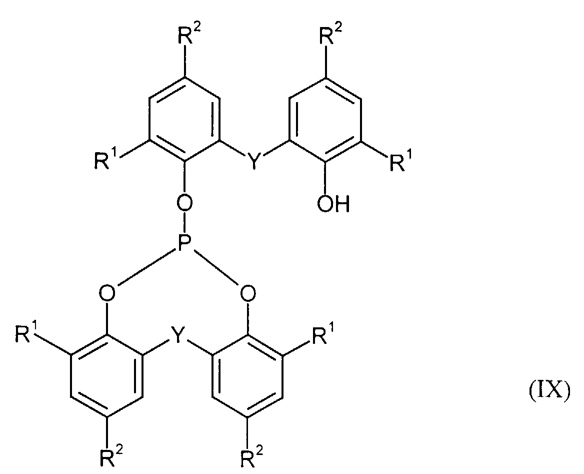 worin
- R¹ und R²: gleich oder verschieden sind und einen Alkylrest mit 1 bis 9 Kohlenstoffatomen, einen Cycloalkylrest mit 5 bis 6 Kohlenstoffatomen, einen Aralkylrest mit 7 bis 9 Kohlenstoffatomen oder einen Arylrest mit 6 bis 10 Kohlenstoffatomen und R¹ außerdem einen Wasserstoffrest und
- Y: eine einfache Bindung, ein Schwefelatom oder einen Rest -CHR³- darstellen, wobei
R³ für ein Wasserstoffatom, einen Alkylrest mit 1 bis 6 Kohlenstoffatomen, einen Cyclohexenylrest oder Cyclohexylrest steht
und/oder die Phosphorigsäureester der Formel (IV) 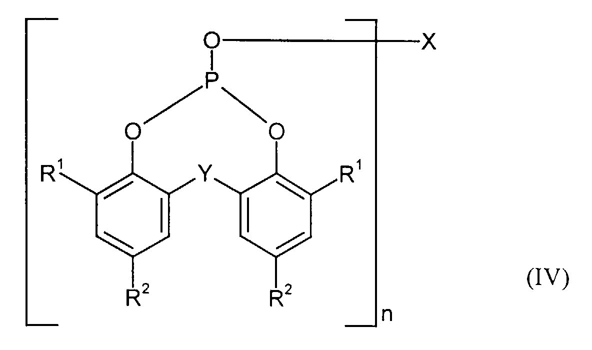 worin
- R¹, R² und Y: dieselbe Bedeutung wie oben haben und
- X: Wasserstoff, einen gegebenenfalls substituierten ein- bis vierbindigen geradkettigen oder verzweigten C₁-C₁₈-Alkylrest, C₇-C₁₈-Aralkylrest oder C₆-C₁₈-Arylrest bedeutet, wobei jeder der Reste olefinische Doppelbindungen und/oder Heteroatome wie N, O oder S enthalten kann und
- n: eine ganze Zahl von 1 bis 4 entsprechend der Bindigkeit von X bedeutet,
werden zur Stabilisierung von organischen Isocyanaten eingesetzt.

Bevorzugt werden die Verbindungen der Formel (IX) und/oder der Formel (IV) zusammen mit sterisch gehinderten Phenolen zur Stabilisierung von organischen Isocyanaten eingesetzt.

Ein weiterer Gegenstand der Erfindung sind stabilisierte organische Isocyanate, die dadurch gekennzeichnet sind, daß die Isocyanate zusätzlich 10 bis 5 000 ppm Phosphorigsäureester der Formel (IX) und/oder der Formel (IV) enthalten.

Bevorzugt enthalten die mit Phosphorigsäureestern der Formel (IX) und/oder der Formel (IV) stabilisierten organischen Isocyanate zusätzlich sterisch gehinderte Phenole.

Ein weiterer Gegenstand der Erfindung ist ein Verfahren zur Herstellung der erfindungsgemäßen, stabilisierten, organischen Isocyanate durch Vermischen der Isocyanate mit Stabilisatoren und gegebenenfalls sterisch gehinderten Phenolen, welches dadurch gekennzeichnet ist, daß man als Stabilisatoren Phosphorigsäureester der Formel (IX) und/oder der Formel (IV) einsetzt.

Eine bevorzugte Ausführungsform des Verfahrens zur Herstellung stabilisierter organischer Isocyanate besteht darin, daß man frisch destillierte Isocyanate bei Temperaturen von 40 bis 160°C mit den Stabilisatoren versetzt und dann abkühlt.

Bevorzugt werden bei der Herstellung der stabilisierten, organischen Isocyanate zusätzlich sterisch gehinderte Phenole zugesetzt.

Die erfindungsgemäßen stabilisatoren sowie die Stabilisatoren der Formel (IV) verhindern ausgezeichnet die Verfärbung von organischen Isocyanaten/Polyisocyanaten über einen weiten Temperaturbereich und einen langen Zeitraum.

Die erfindungsgemäßen, stabilisierten Isocyanate werden zur Herstellung von Polyurethankunststoffen verwendet.

Organische Polyisocyanate können gemäß der vorliegenden Erfindung stabilisiert werden, indem Isocyanat und Stabilisator bzw. Stabilisatormischung bevorzugt auf übliche Weise bei 10 bis 160°C zusammengegeben werden und nach den bekannten Verfahren miteinander gemischt werden. Vorzugsweise wird aus dem Stabilisator bzw. der Stabilisatormischung und dem Isocyanat im Gewichtsverhältnis von 95:5 bis 20:80 bei Temperaturen von 20°C bis 100°C eine Mischung hergestellt und mit dem restlichen Isocyanat auf geeignete Konzentrationen verdünnt. Die Gesamtstabilisatormenge beträgt 10 bis 5000 ppm, bevorzugt 20 bis 2000 ppm und besonders bevorzugt 30 bis 1500 ppm. Die Phosphorverbindungen (I) und (IV) und die sterisch gehinderten Phenole sind prinzipiell in jedem Verhältnis zueinander einsetzbar. Bevorzugt ist jedoch ein Verhältnis von 4:1 bis 1:4, besonders bevorzugt 1:2 bis 2:1.

Geeignete Isocyanate, die gegen Verfärbung stabilisiert werden, sind vorzugsweise mehrfunktionell und können aliphatisch, cycloaliphatisch oder aromatisch sein. Als Beispiele für geeignete Polyisocyanate seien Hexamethylendiisocyanat, Cyclohexan-1,4-diisocyanat, 2,4-und 2,6-Toluylendiisocyanat und deren Gemische, 1-Isocyanatomethyl-5-isocyanato-1,3,3-trimethylcyclohexan, (2,2,4- bzw. 2,4,4-Trimethylhexamethylendiisocyanat-1,6), 1,5-Naphthalin-diisocyanat, 1,3-Cyclopentylen-diisocyanat, m- und p-Phenylen-diisocyanat, 2,4,6-Toluylentriisocyanat, 4,4',4''-Triphenylmethantriisocyanat, 1,3- und 1,4-Xylylendiisocyanat, 3,3'-Dimethyl-4,4'-biphenylendiisocyanat, Durendiisocyanat, 1-Phenoxy-2,4'-phenylendiisocyanat, 1-tert.-Butyl-2,4-phenylendiisocyanat, Methylen-bis-4,4'-cyclohexyldiisocyanat, 1-Chlor-2,4-phenylendiisocyanat und 4,4'-Diphenyletherdiisocyanat genannt.

Weiterhin ist es möglich, höhermolekulare und gegebenenfalls auch höherfunktionelle Polyisocyanate, die aus niedermolekularen Grundkörpern durch Polymerisationsreaktion zu Uretdionen oder Isocyanuratderivaten hergestellt werden, einzusetzen. Beispielsweise seien das Uretdion aus 2 Mol 2,4-Toluylendiisocyanat und die isocyanuratringhaltigen Polymerisationsprodukte aus 2,4- und 2,6-Toluylendiisocyanat oder Hexamethylendiisocyanat, ein durchschnittlich 2 Isocyanuratringe im Molekül enthaltenes und aus 5 Mol Toluylendiisocyanat gebildetes System oder ein entsprechendes Derivat aus durchschnittlich 2 Mol Toluylendiisocyanat und 3 Mol Hexanmethylendiisocyanat, erwähnt.

Nach einer weiteren Aufbaumethode ist es möglich, aus Di- oder Polyisocyanaten durch partielle Hydrolyse über die Stufe der Carbamidsäure und des Amins höhere biuretverknüpfte Systeme herzustellen, z.B. eine biuretverknüpfte Verbindung, die formal aus 3 Mol Hexamethylendiisocyanat unter Zusatz von 1 Mol Wasser und Abspaltung von 1 Mol Kohlendioxid entstanden ist.

Ebenfalls geeignete Polyisocyanate erhält man bei der Umsetzung von Di- und Polyolen mit di- oder polyfunktionellen Isocyanaten, wenn das Molverhältnis von Hydroxyverbindungen zum Isocyanat so gewählt wird, daß bei den statistisch gebildeten Reaktionsprodukten stets freie NCO-Funktionen vorhanden bleiben und ein Molgewicht von 2000 bis 3000 nicht überschritten wird. Ähnliche geeignete Polyisocyanate erhält man aus hydroxylgruppenhaltigen Polyestern durch Umsetzen mit überschüssigen di- oder polyfunktionellen Isocyanaten.

Alle oben beschriebenen Di- und Polyisocyanate können in dieser Weise mit Di- und Polyolen, wie Mono- und Polyethylenglykol, Propandiolen, Butandiolen, Neopentylglykol und anderen Pentandiolen, Adipol und anderen Hexandiolen, Cyclohexandiolen, 1,4-Dihydroxymethylcyclohexan, Perhydrobisphenol A, Glycerin, Trimethylolethan, Trimethylolpropan, anderen Hexantriolen und Pentaerythrit, unter den beschriebenen Voraussetzungen umgesetzt werden.

Bevorzugt werden Diisocyanate, insbesondere Hexamethylendiisocyanat, Isophorondiisocyanat, Toluylendiisocyanat und Diphenylenmethandiisocyanat eingesetzt. Besonders bevorzugt sind Toluylen- und Diphenylmethandiisocyanat.

Erfindungsgemäß einzusetzende Phosphorigsäureester sind solche der Formel (I), worin R¹ und R² gleich oder verschieden sind und einen Alkylrest mit 1 bis 9 Kohlenstoffatomen, einen Cycloalkylrest mit 5 bis 6 Kohlenstoffatomen, einen Aralkylrest mit 7 bis 9 Kohlenstoffatomen oder einen Arylrest mit 6 bis 10 Kohlenstoffatomen und R¹ Wasserstoff und Y eine einfache Bindung, ein Schwefelatom oder -HCR³- und R³ ein Wasserstoffatom, einen C₁- bis C₆-Alkylrest, einen Cyclohexenylrest oder einen Cyclohexylrest darstellen.

R' ist bevorzugt ein Methyl-, Ethyl-, Propyl-, Isopropyl-, Butyl-, Isobutyl-, tert.-butyl-, tert.-Amyl-, Cyclopentyl-, Cyclohexyl-, Benzyl-, α-Methylbenzyl- oder α,α-Dimethylbenzylrest; R² ist bevorzugt ein rest wie für R¹ definiert oder ein Arylrest mit 6 bis 10 Kohlenstoffatomen.

R¹ und R² sind besonders bevorzugt Methyl-, Isopropyl-, ter.-butyl-, Cyclopentyl-, Cyclohexyl-, Benzyl-, α-Methylbenzyl- und α,α-Dimethylbenzylreste.

R¹ stellt ganz besonders bevorzugt einen Methyl-, Isopropyl-, Cyclopentyl-, Cyclohexyl-, Benzyl- oder α-Methyl-benzyl-Rest dar, R² stellt ganz besonders bevorzugt einen Methylrest dar, Y ist bevorzugt ein Schwefelatom oder -HCR³-, wobei R³ ein Wasserstoffatom, einen Methyl-, Ethyl-, Isopropyl-, Propyl-, Cyclohexyl- oder Cyclohexenylrest darstellt, besonders bevorzugt ein Schwefelatom oder eine Methylengruppe.

Geeignet sind weiter Phosphorigsäureester der Formel (IV), worin R¹, R² und Y die gleiche Bedeutung haben wie in der Formel (IX), ausgenommen R' = H und X ein Wasserstoffatom, einen gegebenenfalls substituierten ein- bis vierbindigen geradkettigen oder verzweigten aliphatischen Rest mit 1 bis 18 Kohlenstoffatomen, Aralkylrest mit 1 bis 18 Kohlenstoffatomen oder aromatischen Rest mit 6 bis 18 Kohlenstoffatomen bedeutet, wobei jeder der Reste olefinische Doppelbindungen und/oder Heteroatome, vorzugsweise N, O und/oder S, enthalten kann, und n eine ganze Zahl von 1 bis 4, vorzugsweise 1 bis 2 ist, mit der Bedingung, daß n = 1 für X = H ist.

Als Substituenten in den zu X genannten Resten eignen sich vorzugsweise -OH, -SH, C₁- bis C₄-Alkoxy-, Amino-, C₁- bis C₈-Alkylamino-, C₁- bis C₈-Dialkylamino-, C₁-bis C₄-Alkylmercapto-, C₁- bis C₁₂-Alkyl-, C₇- bis C₁₂-Aralkyl-, C₆- bis C₁₀-Aroxy- und C₆- bis C₁₀-Arylgruppen.

X steht vorzugsweise für ein Wasserstoffatom oder einen Rest der allgemeinen Formel (V) 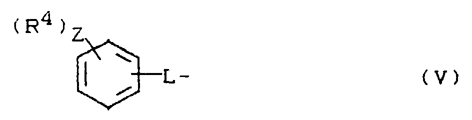 mit
- R⁴ =: Wasserstoff, -L-, Aryl-, ein kondensierter Ring, ein C₁-C₉-Alkyl-, C₇-C₁₂-Alkaryl, C₁-C₄-Alkylmercapto-, C₁-C₄-Alkoxy-, β-Hydroxyalkoxyrest, eine OH-, Amino-, SH-Gruppe oder ein 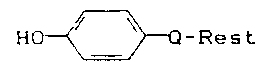 mit Q eine einfache Bindung,
O, S, O-(CH₂)₂-O, C₁-C₄-Alkyliden und
- Z =: 1 oder 2,
- L =: eine einfache Bindung oder Alkylenoxy
oder einen Rest der allgemeinen Formel (VI) 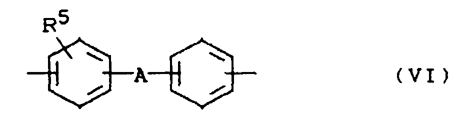 mit
- R⁵ =: OH, H
- A =: eine einfache Bindung, ein C₁-C₄-Alkylidenrest, O, S oder O-(CH₂)₂-O,
oder einen ein- oder zweibindigen C₁-C₁₈-Alkylrest, der durch Phenyl, OH oder Phenoxy substituiert ist und gegebenenfalls über Etherbrücken oder S-Brücken verbunden sein kann, einen C₁-C₉-Alkyl-cyclohexyl- oder Tetralylrest oder einen Rest der allgemeinen Formel (VII) 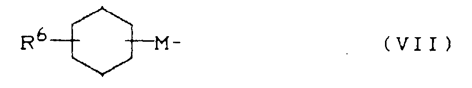 mit
- R⁶ =: H, -M-, ein Hydroxyalkyl-, ein Hydroxyalkoxy-, Alkylenrest, H, OH oder eine Bindung
- M: einen Alkylen-, Alkylencycloalkylrest bedeuten
oder 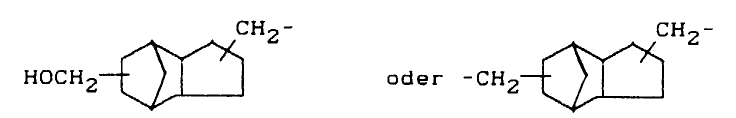 oder Oxyalkylierungsprodukte von Glycerin, Trimethylolpropan oder Pentaerythrit mit 3 bis 8 Oxyethyl- oder Oxypropylresten.

Phosphorigsäureester der Formel (IV) sind an sich bekannt und beispielsweise in US-A 4 252 750 (EP-A 9115) beschrieben. Sie werden durch Umsetzung von Phosphorigsäureestern mit entsprechenden Bisphenolen und Mono- oder Polyhydroxyverbindungen hergestellt.

Geeignete Ausgangsprodukte zur Herstellung von Verbindungen der Formel (I) und (IV) sind:
1. Bisphenole der allgemeinen Struktur (II) 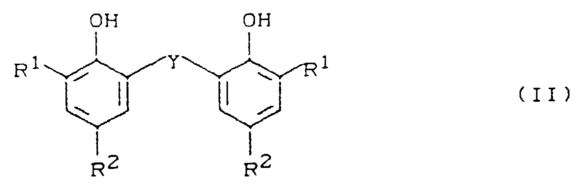 worin
   - R¹, R² und Y: die obengenannte Bedeutung haben.

   Beispielsweise können folgende Verbindungen bevorzugt zur Herstellung der erfindungsgemäßen Verbindungen der Formel (I) bzw. der erfindungsgemäß einzusetzenden Verbindungen der Formel (I) und (IV) verwendet werden. 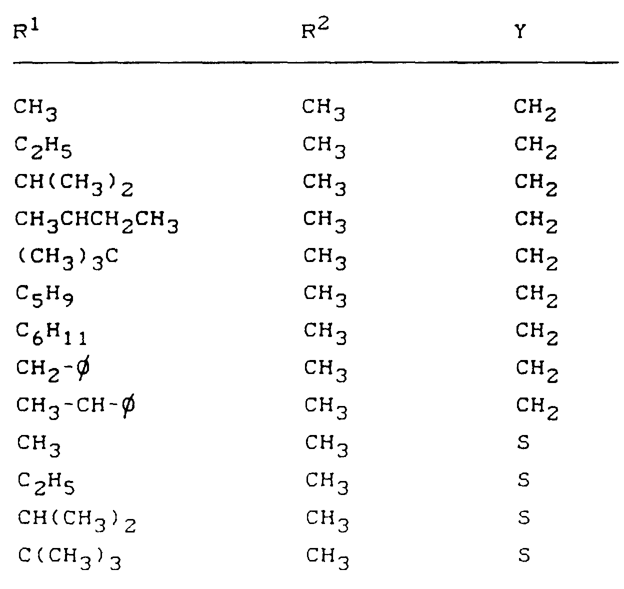 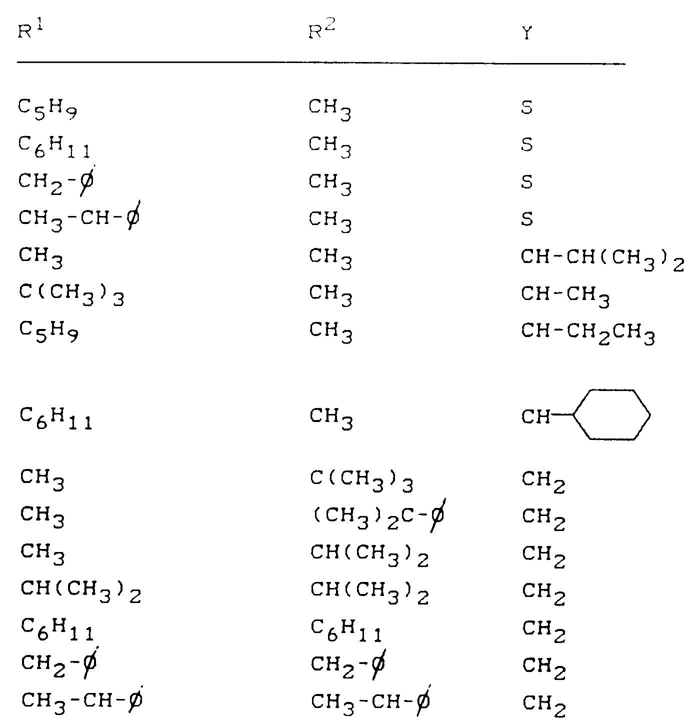
2. Phosphorigsäureester der Formel (III)

   PW₃ (III)

   worin W Halogen oder OR⁷ bedeutet mit R⁷ = H, C₁-C₁₅-Alkyl und C₆-C₁₀-Aryl, wobei R⁷ = H jeweils nur einmal in P(OR⁷)₃ auftreten darf und dies nur bei der Herstellung von Verbindungen der Formel (IV).
   Bevorzugt ist W, Chlor oder Brom und R⁷ = H, CH₃, C₂H₅, C₄H₉, Phenyl, Kresyl oder Isononylphenyl.
   Geeignet sind beispielsweise:
   Phosphortrichlorid, Trimethylphosphit, Triethylphosphit, Triphenylphosphit, Trikresylphosphit, Tris-isononylphenylphosphit, Dimethylphosphit, Diethylphosphit, Diphenylphosphit und Dikresylphosphit.
3. Mono- und Polyhydroxyverbindungen der allgemeinen Formel (VIII) für die Synthese der Verbindungen (IV)

   X(OH)ₙ (VIII)

   wobei
   - n und X: die oben angegebene Bedeutung haben.

   Geeignete Mono- und Polyhydroxyverbindungen sind beispielsweise o,m,p-Kresol, 2,4-Dimethylphenol, 3,5-Dimethylphenol, Isononylphenol, Benzylphenol, Styrylphenol, p-Methyl-mercapto-phenol, o,m,p-Methoxyphenol, m-(N,N-Dimethylamino)-phenol, o,p-Phenylphenol, p-Hydroxy-phenol, 4,4'-Dihydroxydiphenylmethan, 4,4'-Dihydroxydiphenylpropan-2,2, 4,4'-Dihydroxydiphenyl, 4,4'-Dihydroxydiphenylether, 4,4'-Dihydroxydiphenylsulfid, Wasser, Methanol, Ethanol, Octanol, Dodecanol, Stearylalkohol, Phenoxyethanol, Benzylalkohol, Cyclohexandimethanol, perhydriertes 4,4'-Dihydroxy-dicyclohexylpropan-2,2, Hexandiol-1,6, Diglykol, Triglykol, Tetraglykol, Octaethylenglykol, Thiodiglykol, Bisoxethylbisphenol A, Bisoxethylhydrochinon, oxethyliertes Glycerin und oxethyliertes Pentaerythrit mit 3 bis 8 Oxyethylresten.

Die Verbindungen der Formel (I) und (IV) können nach an sich bekannten Verfahren hergestellt werden. Dabei sind folgende Verfahrensvarianten möglich:

Man kann z.B. die als Ausgangsprodukte verwendeten Bisphenole mit Triaryl- oder Trialkylphosphiten vorzugsweise Triphenyl-, Trimethyl- oder Triethylphosphit bei Temperaturen zwischen 50 und 300°C, vorzugsweise 80 bis 250°C miteinander zur Reaktion bringen und die dabei gebildeten Hydroxyverbindungen wie Phenol, Methanol oder Ethanol abdestillieren, was im Falle hochsiedender Hydroxyverbindungen zweckmäßig bei vermindertem Druck geschieht. Zur Beschleunigung der Reaktion können typische Umesterungskatalysatoren verwendet werden, z.B. Alkalimetalle und ihre Derivate, wie Oxide, Hydroxide, Carbonate und ihre Salze mit Carbonsäuren, Verbindungen des 4-wertigen Titans wie Titantetrabutylat und Titantetraphenolat und zinnorganische Verbindungen wie Dibutylzinndilaurat, Dibutylzinnoxid und Dibutylzinndiphenolat.

Das Molverhältnis der Reaktionspartner ist nicht sehr kritisch. Im allgemeinen setzt man sie für (IV) im Verhältnis 1:1 ein. Es ist aber durchaus möglich, das Phosphit in einem bis zu 10-fachen Überschuß einzusetzen und den Überschuß nach der Reaktion zurückzugewinnen.

Für die Synthese von (I) wird dagegen das Bisphenol (II) bis zum 3-fachen Überschuß, vorzugsweise 2,5-fachen eingesetzt.

Nachdem aus dem Reaktionsgemisch zur Bildung von (IV) zwei Äquivalente der ursprünglich im Phosphit gebundenen Hydroxyverbindung abgetrennt sind, verbleibt der dritte im neu gebildeten Phosphorigsäureester (IV) des Bisphenols, d.h. wenn Triphenylphosphit als Ausgangsprodukt gewählt wurde, so ist X in der allgemeinen Formel (IV) ein Phenylrest.

In den Fällen, in denen X verschieden sein soll von den Resten, die mit dem Ausgangsphosphit eingebracht werden, wird er in einem nachfolgenden Umesterungsschritt ausgetauscht. Wenn z.B. X = β-Naphthyl gewünscht wird, so setzt man das zunächst gebildete neue Bisphenolphosphit (X = Phenyl) mit der entsprechenden Hydroxyverbindung also hier β-Naphthol um und destilliert Phenol ab. Für diesen zweiten Reaktionsschritt gelten die gleichen Bedingungen wie sie oben für den ersten geschildert sind. Hier sollten allerdings die Molverhältnisse entsprechend den Zielprodukten gewählt werden. Im soeben dargelegten Beispiel wird also β-Naphthol im Molverhältnis 1:1 mit dem cyclischen Phosphorigsäureester (IV) umgesetzt. Eine Dihydroxyverbindung, z.B. Hexandiol-1,6 kann je nach Zielprodukt im Molverhältnis 1:1 oder 1/2:1 mit dem Bisphenolphosphit umgesetzt werden, eine Trihydroxyverbindung im Verhältnis 1:1, 1/3:1 und 2/3:1 usw.

Die Hydroxyverbindung, über die der neue Rest X eingeführt werden soll, beispielsweise β-Naphthol, kann allerdings auch zunächst mit dem Trialkyl- oder Triarylphosphit zur Reaktion gebracht werden und dann mit dem Bisphenol. Sie kann aber auch gleichzeitig mit dem Bisphenol eingesetzt werden.

Für den Fall, daß X = H ist, geht man zweckmäßig von den Dialkyl- bzw. Diarylphosphiten aus und entfernt dann destillativ zwei Äquivalente Hydroxyverbindung aus dem Reaktionsgemisch. Die Dialkyl- oder Diarylphosphite lassen sich leicht aus den Trialkyl- oder Triarylphosphiten durch Zugabe der berechneten Menge Wasser in situ erzeugen.

Grundsätzlich kann der Rest X auch vom vorgefertigten Bisphenolphosphit durch Wasser abgespalten werden. Dies ist jedoch im allgemeinen aufwendiger.

Ein weiterer Zugang zu den Verbindungen besteht in der Umsetzung der Bisphenole und der die Gruppe X tragenden Hydroxyverbindungen mit Phosphortrihalogeniden, insbesondere Phosphortrichlorid, unter Abspaltung von Halogenwasserstoffen. Diese Methode bietet jedoch keine wesentlichen Vorteile gegenüber den oben beschriebenen.

Die erfindungsgemäß zu verwendenden Phosphorigsäureester der Formeln (I) und (IV) oder Gemische derselben können als solche oder bevorzugt in Kombination mit sterisch gehinderten Phenolen eingesetzt werden.

Erfindungsgemäß geeignete, sterisch gehinderte Phenole als Co-Stabilisatoren sind:

Alkylierte Monophenole, z.B. 2,6-Di-tert.-butyl-4-methylphenol, 2-Tert.-butyl-4,6-dimethylphenol, 2,6-Di-tert.-butyl-4-ethylphenol, 2,6-Di-tert.-butyl-4-n-butylphenol, 2,6-Di-tert.-butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.-butyl-4-methoxymethylphenol.

Alkylierte Hydrochinone, z.B. 2,6-Di-tert.-butyl-4-methoxyphenol, 2,5-Di-tert.-butyl-hydrochinon, 2,5-Di-tert.-amyl-hydrochinon, 2,6-Diphenyl-4-octadecyl-oxyphenyl.

Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol).

Alkyliden-Bisphenole, z.B. 2,2'-Methylen-bis-(6-tert.-butyl-4-methylphenol), 2,2'-Methylen-bis-(6-tert.-butyl-4-ethylphenol), 2,2'-Methylen-bis-(4-methyl-6(α-methylcyclohexyl)-phenol), 2,2'-Methylen-bis-(4-methyl-6-cyclohexylphenol), 2,2'-Methylen-bis-(6-nonyl-4-methylphenol), 2,2'-Methylen-bis-(4,6-di-tert.-butylphenol), 2,2'-Ethyliden-bis-(4,6-di-tert.-butylphenol), 2,2'-Ethyliden-bis-(6-tert.-butyl-4-isobutylphenol), 2,2'-Methylen-bis-[6-(α-methylbenzyl)-4-nonylphenol), 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.-butyl-2-methylphenol), 1,1-Bis-(5-tert.-butyl-4-hydroxy-2-methylphenyl)-butan, 2,6-Di-(3-tert.-butyl-5-methyl-2-hydroxybenzyl)-4-methylphenol, 1,1,3-Tris-(5-tert.-butyl-4-hydroxy-2-mehylphenyl)-butan, 1,1-Bis-(5-tert.-butyl-4-hydroxy-2-methylphenyl)-3-n-dodecylmercaptobutan, Ethylenglykolbis-[3,3-bis-(3'-tert.-butyl-4'-hydroxyphenyl)-butyrat], Di-(3-tert.-butyl-4-hydroxy-5-methylphenyl)-dicyclopentadien, Di-[2-(3'-tert.-butyl-2'-hydroxy-5'-methylbenzyl)-6-tert.-butyl-4-methylphenyl]-terephthalat.

Benzylverbindungen, z.B. 1,3,5-Tri-(3,5-di-tert.-butyl-4-hydroxybenzyl)-2,4,6-trimethylbenzol, Di-(3,5-di-tert.-butyl-4-hydroxybenzyl)-sulfid, 3,5-Di-tert.-butyl-4-hydroxybenzyl-mercaptoessigsäure-isooctylester, Bis-(4-tert.-butyl-3-hydroxy-2,6-dimethylbenzyl)-dithiolterephthalat, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 3,5-Di-tert.-butyl-4-hydroxybenzyl-phosphonsäure-dioctadecylester, 3,5-Di-tert.-butyl-4-hydroxybenzyl-phosphonsäure-monoethylester, Calcium-Salz.

Acylaminophenole, z.B. 4-Hydroxy-laurinsäureanilid, 4-Hydroxystearinsäureanilid, 2,4-Bis-octylmercapto-6-(3,5-di-tert.-butyl-4-hydroxyanilino)-s-triazin, N-(3,5-di-tert.-butyl-4-hydroxyphenyl)-carbaminsäureoctylester.

Ester der β-(3,5-Di-tert.-butyl-4-hydroxyphenyl)-pronionsäure mit ein- oder mehrwertigen Alkoholen, wie z.B. Methanol, Octadecanol, 1,6-Hexandiol, Neopentylglykol, Thiodiethylenglykol, Diethylenglykol, Triethylenglykol, Pentaerythrit, Tris-hydroxyethylisocyanurat, Di-hydroxyethyl-oxalsäurediamid.

Ester der β-(5-tert.-butyl-4-hydroxy-3-methylphenyl)-propionsäure mit ein- oder mehrwertigen Alkoholen, wie z.B. mit Methanol, Octadecanol, 1,6-Hexandiol, Neopentylglykol, Thiodiethylenglykol, Diethylenglykol, Triethylenglykol, Pentaerythrit, Tris-hydroxyethyl-isocyanurat, Di-hydroxyethyl-oxyalsäurediamid.

Amide der β-(3,5-Di-tert.-butyl-4-hydroxyphenyl)-propionsäure, wie z.B. N,N'-Di-(3,5-di-tert.-butyl-4-hydroxyphenylpropionyl)-hexamethylendiamin, N,N'-(3,5-di-tert.-butyl-4-hydroxyphenylpropionyl)-trimethylendiamin, N,N'-Di-(3,5-di-tert.-butyl-4-hydroxyphenylpropionyl)-hydrazin.

Die Erfindung soll anhand der nachfolgenden Beispiele näher erläutert werden.

### Synthesebeispiele für Verbindungen der Formel (I)

### Beispiel 1

R¹ = C₆H₁₁, R² = CH₃, Y = CH₂
160 g (0,4 Mol) Bis-(2-hydroxy-3-cyclohexyl-5-methylphenyl)-methan und 62 g (0,2 Mol) Triphenylphosphit werden unter Luftausschluß aufgeschmolzen und unter Abdestillieren von Phenol im Wasserstrahlvakuum bei Sumpftemperaturen von etwa 100 bis 220° zuletzt im Hochvakuum umgeestert. Nach etwa 10 bis 12 h sind etwa 50 g Phenol übergegangen. Man erhält ein helles Harz, das aus Isooctan/Cyclohexan kristallisiert wird und einen Schmelzpunkt von 133-134°C aufweist. Nach den Analysenergebnissen (NMR; Elementaranalyse) kommt dem Harz die Formel (Ia) zu. 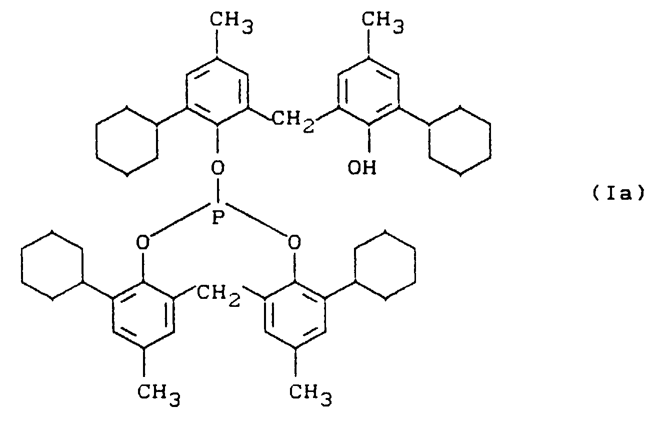 Analog wurden hergestellt:

| | R¹ | R² | Y | Schmelzpunkt |
|---|---|---|---|---|
| Ib | CH(CH₃)₂ | CH₃ | CH₂ | gelbliches Harz |
| Ic | C(CH₃)₃ | CH₃ | S | gelbliches Harz |
| Id | H₂C-Ø | CH₃ | CH₂ | gelbliches Harz |
| Ie | CH₃ | CH₃ | CH-CH(CH₃)₂ | 145-149°C |
| If | CH₃CH-Ø | CH₃ | CH₂ | gelbliches Harz |
| Ig | C(CH₃)₃ | CH₃ | CH₂ | 95-98°C |
| Ih | C₅H₉ | CH₃ | CH₂ | 130-133°C |

### Beispiel 2

### Phosphorigsäureester aus Phenol und Bis-(2-hydroxy-3-cyclohexyl-5-methyl-phenyl)-methan

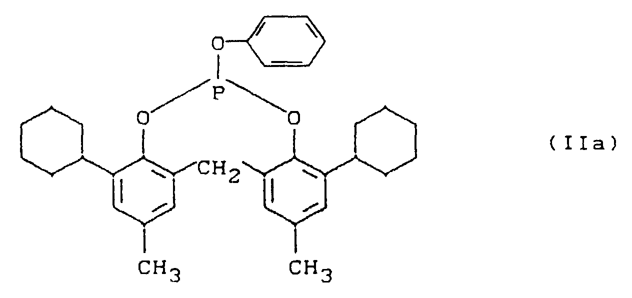

Ein Gemisch aus 392 g (1 Mol) Bis-(2-hydroxy-3-cyclohexyl-5-methyl-phenyl)-methan, 310 g (1 Mol) Triphenylphosphit, 10 g Diphenylphosphit und 0,4 g Lithiumhydroxid wird bei 12 bis 13 Torr in 10 h von 160 bis 225°C unter Rühren erhitzt und dabei 188 g (2 Mol) Phenol abdestilliert. Als Rückstand erhält man 512 g einer schwach gelblichen glasig erstarrenden Schmelze. Das Produkt wird nach Lösen in heißem Ligroin kristallin erhalten.

Schmelzpunkt: 164-166°C;

| | | | | | |
|---|---|---|---|---|---|
| Molgewicht: gef. 508 ; (C₃₃H₃₉PO₃) ber. 514,65; | % C | ber. | 77,02 | gef. | 76,67 |
| | % H | | 7,64 | | 8,00 |
| | % P | | 6,02 | | 6,24 |
| | % O | | 9,33 | | 9,10 |

### Beispiel 3

### Phosphorigsäureester aus Phenol und Bis-(2-hydroxy-3-styryl-5-methyl-phenyl)-methan

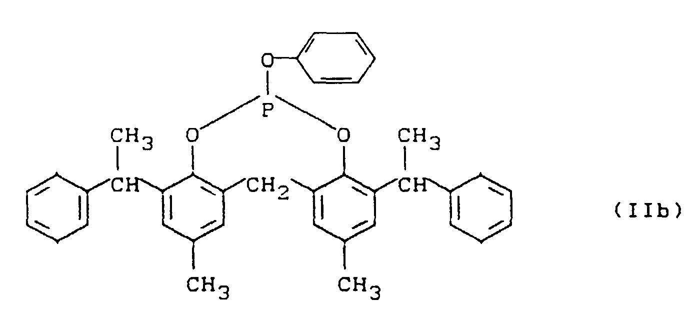

Ein Gemisch von 218 g (0,5 Mol) Bis-(2-hydroxy-3-styryl-5-methyl-phenyl)-methan und 155 g (0,5 Mol) Triphenylphosphit wird bei 16 bis 18 Torr in 8 h von 170 bis 250° unter Rühren erhitzt, wobei 94 g (1 Mol) Phenol abdestillieren. Man erhält 276 g einer schwach gelben zu einer spröden Masse erstarrenden Schmelze.

| | | | | | |
|---|---|---|---|---|---|
| C₃₇H₃₅PO₃ (558,66) | % C | ber. | 79,55 | gef. | 79,09 |
| | H | | 6,32 | | 6,57 |
| | P | | 5,54 | | 5,12 |

### Beispiel 4

### Phosphorigsäureester aus Phenol und Bis-(2-hydroxy-3-benzyl-5-methylphenyl)-methan

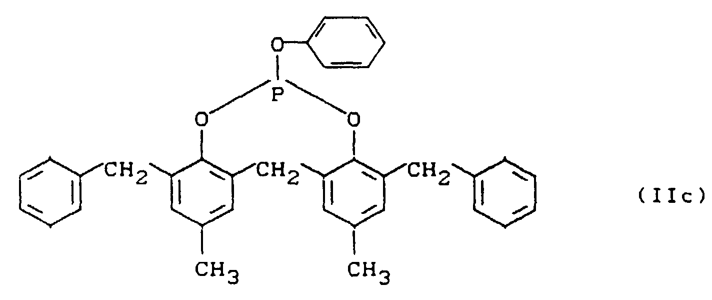

Ein Gemisch von 204 g (0,5 Mol) Bis-(2-hydroxy-3-benzyl-5-methyl-phenyl)-methan und 155 g Triphenylphosphit wird bei 14 Torr in 6 h von 160 bis 230° erhitzt, wobei insgesamt 92 g Phenol übergehen. Man erhält 263 g eines gelblichen Harzes.

### Beispiel 5

### Phosphorigsäureester aus Bis-(2-hydroxy-3-cyclohexyl-5-methyl-phenyl)-methan und 1 Mol Octaethylenglykol

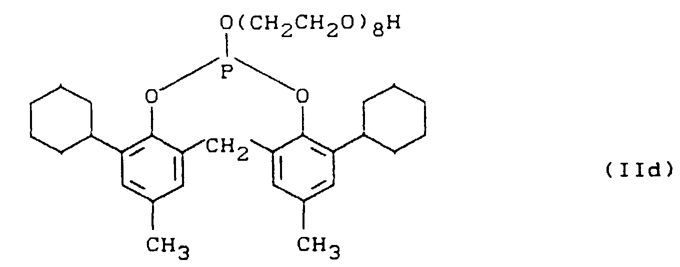

Ein Gemisch aus 514 g (1 Mol) des Phosphorigsäureesters nach Beispiel 2 und 370 g (1 Mol) Octaethylenglykol wird in 2,5 h von 200 bis 250° bei 20 Torr erhitzt. Dabei destillieren 90 g Phenol ab. Das Reaktionsprodukt ist ein gelbes Harz (790 g).

### Beispiel 6

### Phosphorigsäureester aus Bis-(2-hydroxy-3-cyclohexyl-5-methyl-phenyl)-methan und 0,5 Mol Octaethylenglykol

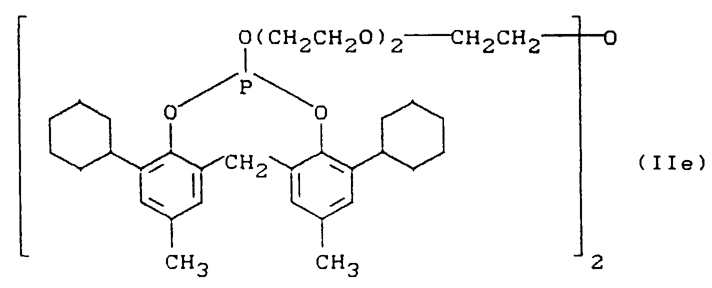

Ein Gemisch aus 514 g (1 Mol) des Phosphorigsäureesters nach Beispiel 2 und 185 g (0,5 Mol) Octaethylenglykol wird in 4 h von 230 bis 250° bei 30 Torr erhitzt. Dabei destillieren 89 g Phenol ab. Man erhält als Reaktionsprodukt ein gelbes Harz (610 g).

### Beispiel 7

### Phosphorigsäureester aus Bis-(2-hydroxy-3-cyclohexyl-5-methyl-phenyl)-methan und Stearylalkohol

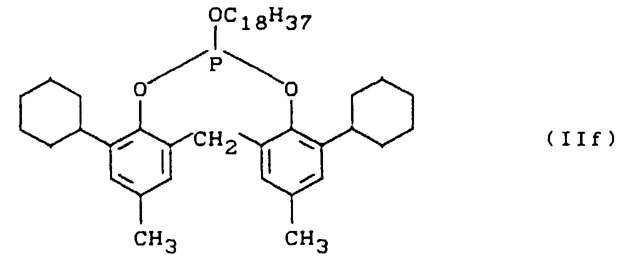

Ein Gemisch von 103 g (0,2 Mol) Phosphorigsäureester nach Beispiel 2 und 53 g (0,2 Mol) Stearylalkohol werden bei 16 Torr in 12 h von 155 auf 245° erhitzt. Dabei destillieren 16 g Phenol über. Der Rückstand bildet ein gelbliches opakes Harz.

### Beispiel 8

### Phosphorigsäureester des Bis-(2-hydroxy-3-cyclohexyl-5-methyl-phenyl)-methans

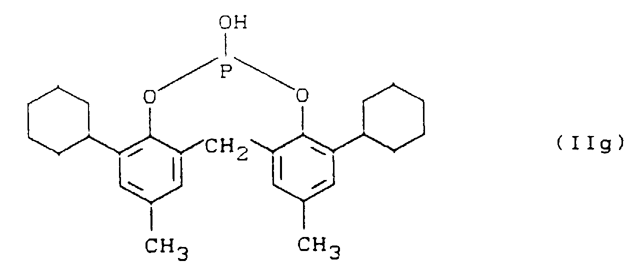

Ein Gemisch aus 392 g (1 Mol) Bis-(2-hydroxy-3-cyclohexyl-5-methyl-phenyl)-methan, 310 g (1 Mol) Triphenylphosphit und 18 g (1 Mol) Wasser wird unter Normaldruck und N₂ bis 180° erhitzt. Man läßt abkühlen auf 100° und erhitzt dann bei 25 Torr in 2,5 h von 100 auf 200°. Dabei gehen 270 g Phenol über. Als Rückstand verbleibt ein fast farbloses, langsam kristallisierendes Produkt (450 g). Schmp.: 180-1° (aus Xylol) MG 403 (ber. 438).

### Beispiel 9

### Phosphorigsäureester des Bis-(2-hydroxy-3-benzyl-5-methyl-phenyl)-sulfids

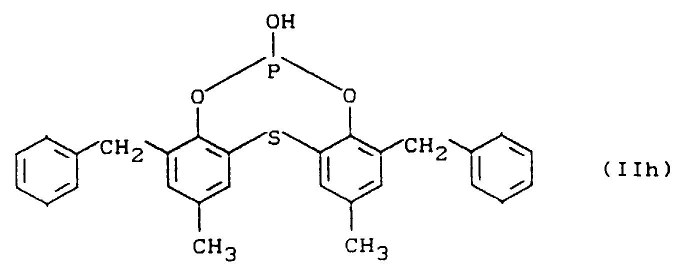

Ein Gemisch von 213 g Bis-(2-hydroxy-3-benzyl)-5-methylphenyl)-sulfid (0,5 Mol), 155 g (0,5 Mol) Triphenylphosphit und 9 g (0,5 Mol) H₂O wird zunächst unter N₂ und Normaldruck auf 180° gebracht und nach Abkühlen auf 100° bei 25 Torr in 2 h von 100° auf 200°. 135 g Phenol destillieren über. Das Reaktionsprodukt (250 g) stellt ein gelbliches Harz dar.

### Beispiel 10

### Phosphorigsäureester des Bis-(2-hydroxy-3-benzyl-5-methyl-phenyl)-methans

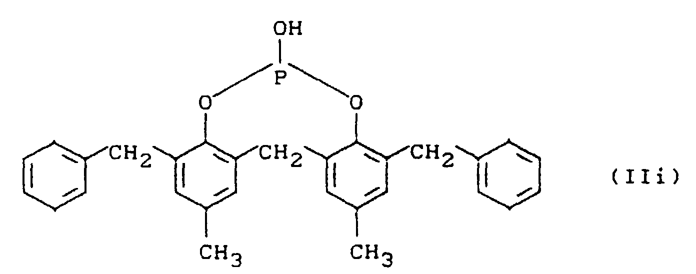

Ein Gemisch aus 77,5 g (0,25 Mol) Triphenylphosphit, 4,5 g (0,25 Mol) H₂O und 102 g (0,25 Mol) Bis-(2-hydroxy-3-benzyl-5-methyl-phenyl)-methan wird wie in Beispiel 8 umgesetzt. Man erhält 69 g Phenol als Destillat und 118 g der Titelverbindung als gelbliches Harz.

### Beispiel 11

### Phosphorigsäureester des Bis-(2-hydroxy-3-cyclohexyl-5-methyl-phenyl)-sulfids

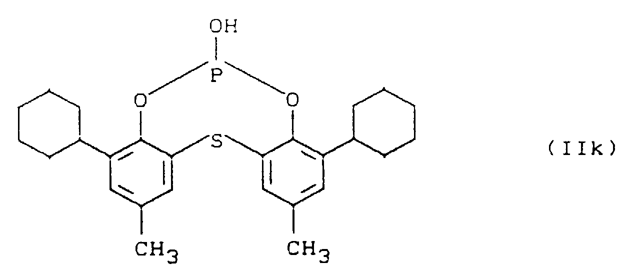

Ein Gemisch von 41 g (0,1 Mol) Bis-(2-hydroxy-3-cyclohexyl-5-methyl-phenyl)-sulfid, 31 g (0,1 Mol) Triphenylphosphit und 1,8 g (0,1 Mol) H₂O wird unter N₂ und Rühren auf 180° gebracht, auf 100° abgekühlt und dann bei 12 bis 13 Torr in 5 h von 100 bis 250° erhitzt, wobei 27 g Phenol übergehen. Als Reaktionsprodukt bleiben 45 g eines festen hellgelben Harzes. Aus Ligroin erhält man Kristalle mit einem Schmelzpunkt von 122°C.

| | | | | | |
|---|---|---|---|---|---|
| C₂₆H₃₃PO₃S (456,59) | % C | ber. | 68,35 | gef. | 68,13 |
| | H | | 7,29 | | 7,52 |
| | P | | 6,78 | | 6,43 |
| | S | | 7,02 | | 7,28 |

### Beispiel 12

### Phosphorigsäureester aus Bis-(2-hydroxy-3-cyclohexyl-5-methyl-phenyl)-methan und β-Naphthol

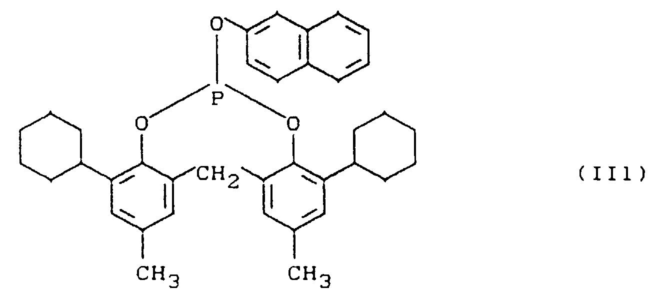

51 g (0,1 Mol) der Verbindung aus Beispiel 2 und 14 g (0,1 Mol) β-Naphthol werden in Gegenwart von 0,05 g Lithiumhydroxid als Katalysator bei 115 bis 118 mb und 220 bis 280° Sumpftemperatur unter Abdestillieren von Phenol (8,5 g) miteinander umgesetzt. Man erhält ein gelbliches trübes Hartharz (56,5 g), das aus Petrolether Kristalle vom Schmp. 128°C liefert.

### Beispiel 13

### Phoshorigsäureester aus Bis-(2-hydroxy-3-cyclohexyl-5-methyl-phenyl)-methan und 4,4'-Dihydroxydiphenyl-propan-2,2

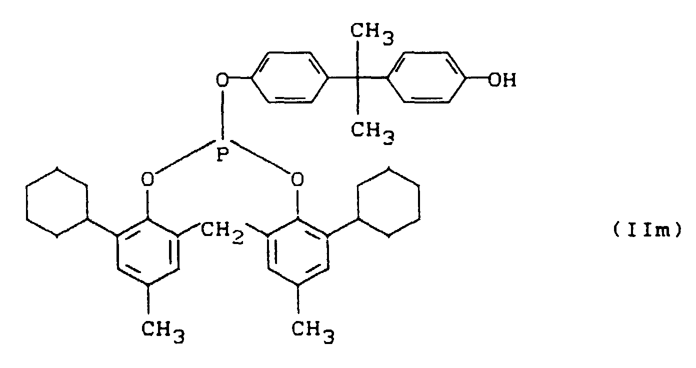

103 g (0,2 Mol) der Verbindung aus Beispiel 2 und 46 g (0,2 Mol) 4,4'-Dihydroxy-diphenyl-propan-2,2 werden bei 1,5 bis 2,0 mb und einer Sumpftemperatur von 140 bis 207° unter Abdestillieren von Phenol (18 g) miteinander umgesetzt. Man erhält 128 g eines gelblichen trüben Hartharzes. Aus Petrolether/Xylol erhält man Kristalle vom Schmp. 129 bis 131°C.

### Beispiel 14

### Phosphorigsäureester aus Bis-(2-hydroxy-3-cyclohexyl-5-methyl-phenyl)-methan und 4-Hydroxy-diphenyl

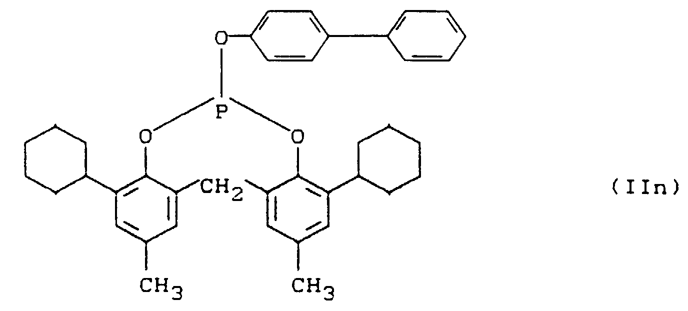

128 g (0,25 Mol) des Phosphorigsäureesters aus Beispiel 2 und 42 g (0,25 Mol) 4-Hydroxydiphenyl werden in Gegenwart von 0,1 g Lithiumhydroxid bei 155 bis 220°C Sumpftemperatur und 17 Torr unter Abdestillieren von Phenol (22 g) in 2-3 h miteinander umgesetzt. Man erhält ein schwach gelbliches Hartharz (148 g), das sich aus Ligroin kristallin erhalten läßt, Schmp. 165-170°C.

### Beispiel 15

### Phosphorigsäureester aus Bis-(2-hydroxy-3-cyclohexyl-5-methyl-phenyl)-methan und 4,4'-Dihydroxy-diphenylsulfid

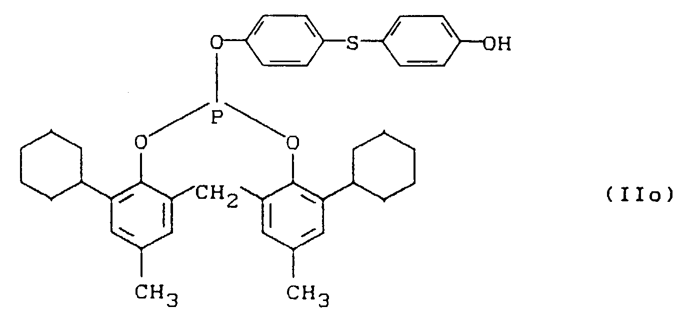

128 g (0,25 Mol) der Substanz aus Beispiel 2 und 46 g (0,25 Mol) 4,4-Dihydroxy-diphenyl-sulfid werden bei 130 bis 220° Sumpftemperatur und 18 Torr in 1 bis 2 h miteinander umgesetzt, wobei 22 g Phenol abdestillieren. Das verbleibende hellbraune Harz (153 g) erhält man kristallin aus Ligroin/Xylol, Schmp. 128-133°.

### Beispiel 16

### Phosphorigsäureester aus N,N-Dimethyl-m-amino-phenol und Bis-(2-hydroxy-3-cyclohexyl-5-methyl-phenyl)-methan

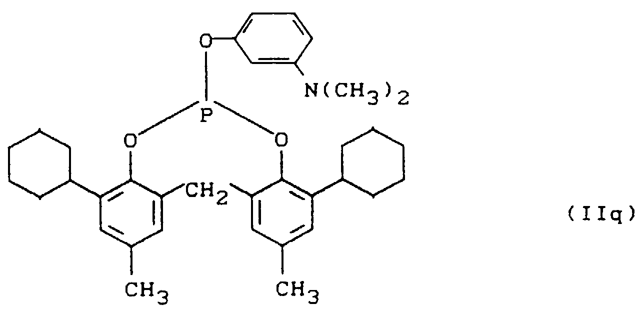

Ein Gemisch aus 51,5 g (0,1 Mol) der Substanz aus Beispiel 2 und 13,8 g (0,1 Mol) N,N-Dimethyl-m-amino-phenol wird bei 17 Torr in 3 h von 150 auf 195°C aufgeheizt und dabei unter Rühren über eine kleine Kolonne Phenol abdestilliert (9,1 g). Man erhält 56 g eines spröden braunen Harzes.

### Beispiel 17

### Phosphorigsäureester aus Thiodiglykol und Bis-(2-hydroxy-3-styryl-5-methyl-phenyl)methan

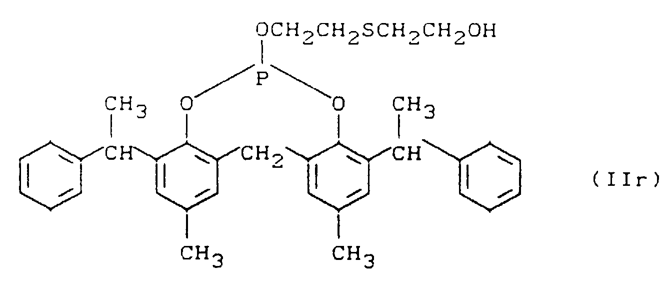

Ein Gemisch aus 55,9 g (0,1 Mol) der Substanz aus Beispiel 3 und 12,2 g (0,1 Mol) Thiodiglykol wird analog Beispiel 15 umgesetzt. Man erhält 57 g eines gelben spröden Harzes.

### Beispiel 18

### Phosphorigsäureester aus Triethanolamin und Bis-(2-hydroxy-3-styryl-5-methyl-phenyl)-methan

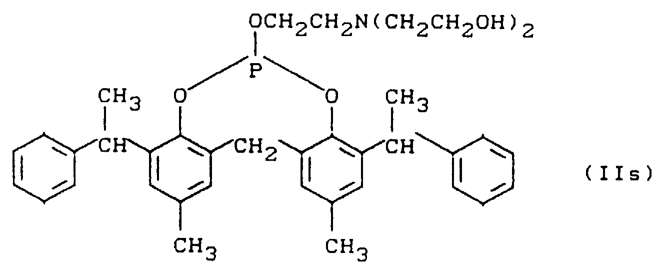

Ein Gemisch aus 55,9 g (0,1 Mol) der Substanz aus Beispiel 3 und 14,9 g (0,1 Mol) Triethanolamin wird analog Beispiel 15 umgesetzt. Man erhält neben 9,0 g Phenoldestillat 70 g eines gelben weichen Harzes.

### Beispiel 19

### Synthese eines Gemisches aus Ia und IIg

Ein Gemisch aus 118 g (0,3 Mol) Bis-(2-hydroxy-3-cyclohexyl-5-methylphenyl)-methan, 62 g (0,2 Mol) Triphenylphosphit und 1,8 g (0,1 Mol) Wasser wird unter Luftausschluß 2 h bei 80 bis 100° gerührt und anschließend im Wasserstrahlvakuum bei Sumpftemperaturen von 100 bis 220° zuletzt im Hochvakuum von Phenol befreit. In 12 h gehen ca. 52 g Phenol über. Man erhält ein helles Harz als Rückstand, das im wesentlichen aus Verbindungen der Formeln (Ia) und (IIg) besteht.
- Ionol =: 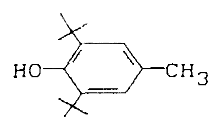
- A =: Gemisch aus [(C₁₃H₂₇O)₂P-O-C₆H₄-]₂C(CH₃)₂ 7 Tle. + Triphenylphosphit 1 Tl. + Ionol 2 Tle.
- B =: 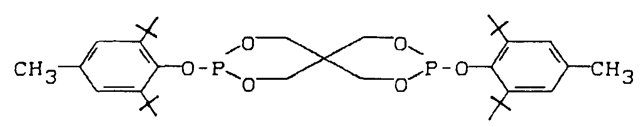
- C =: 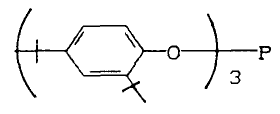
- D =: Triphenylphosphit

### Beispiele für die Stabilisierung

Die Stabilität von 4,4'-Diphenylmethandiisocyanat wurde bei 3 verschiedenen Temperaturen (5°C, 20°C, 53°C) überprüft. Die verschiedenen Stabilisatoren wurden in den angegebenen Konzentrationen zugegeben. Die Mischungen wurden in Gegenwart von Luft und entsprechend der in der Tabelle angegebenen Zeiten gelagert. Anschließend wurde die Farbzahl (APHA) (ISO 6771) gemessen.

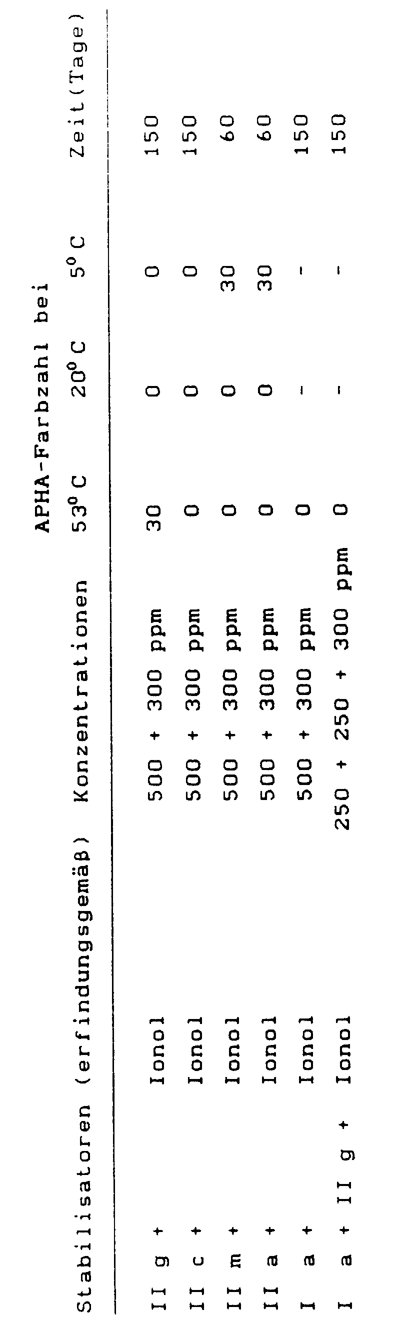

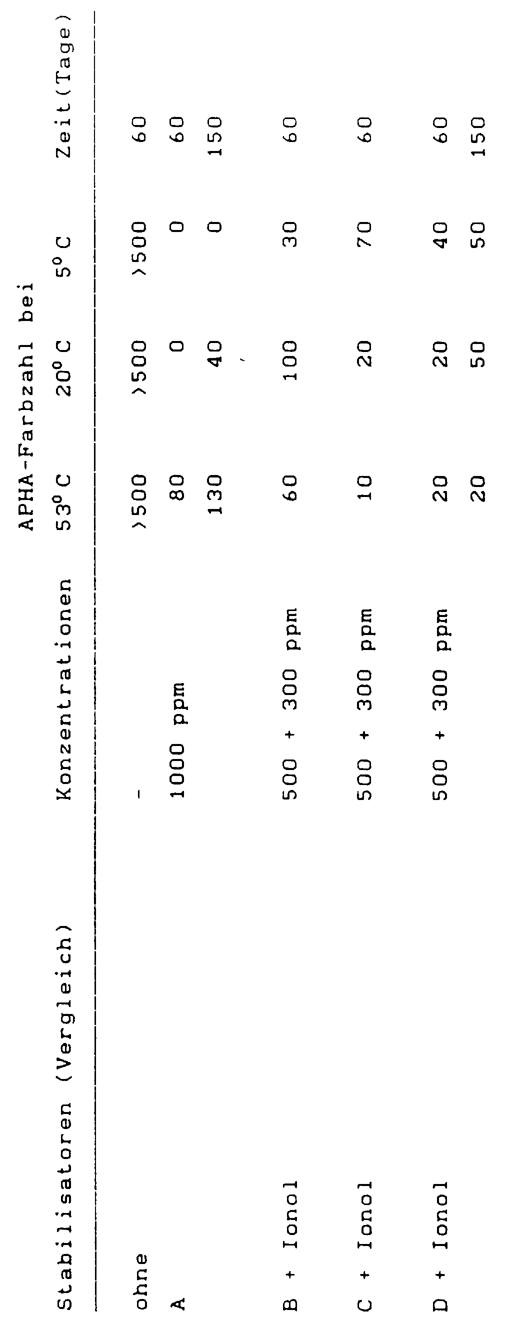

## Patentansprüche

1. Zyklische Phosphorigsäureester der Formel (I) 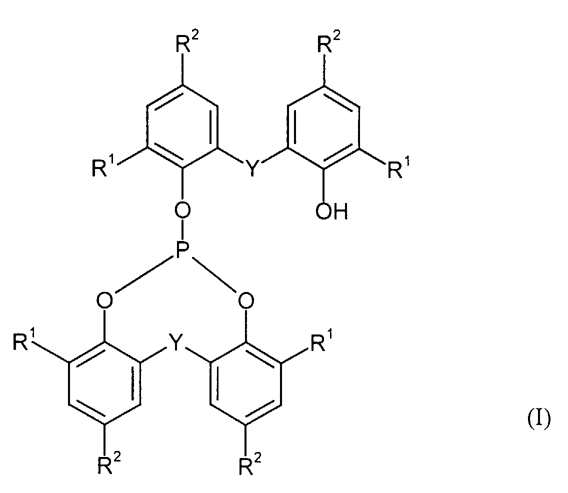 worin
R¹ und R² verschieden sind und einen Alkylrest mit 1 bis 9 Kohlenstoffatomen, einen Cycloalkylrest mit 5 bis 6 Kohlenstoffatomen, einen Aralkylrest mit 7 bis 9 Kohlenstoffatomen oder einen Arylrest mit 6 bis 10 Kohlenstoffatomen und R' außerdem einen Wasserstoffrest und
Y eine einfache Bindung, ein Schwefelatom oder einen Rest -CHR³- darstellen, wobei
R³ für ein Wasserstoffatom, einen Alkylrest mit 1 bis 6 Kohlenstoffatomen, einen Cyclohexenylrest oder Cyclohexylrest steht.

2. Verfahren zur Herstellung der zyklischen Phosphorigsäureester der Formel (I) gemäß Anspruch 1, dadurch gekennzeichnet, daß Bisphenole der Formel (II) 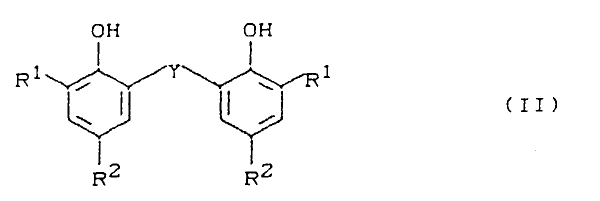 worin
R¹, R² und Y dieselbe Bedeutung haben wie oben,
mit Phosphorigsäureestern der Formel (III)
PW₃ (III)
worin
W ein Halogenatom oder OR⁷ mit R⁷ = C₁- bis C₁₅-Alkylrest oder C₆- bis C₁₀-Arylrest bedeutet,
im Molverhältnis (II)/(III) wie 3 bis 1,3/1, vorzugsweise wie 2,8 bis 1,5/1, besonders bevorzugt wie 2,5 bis 1,7/1, ganz besonders bevorzugt wie 2,2 bis 1,8/1,
umgesetzt werden.

3. Verwendung der zyklischen Phosphorigsäureester der Formel (IX) 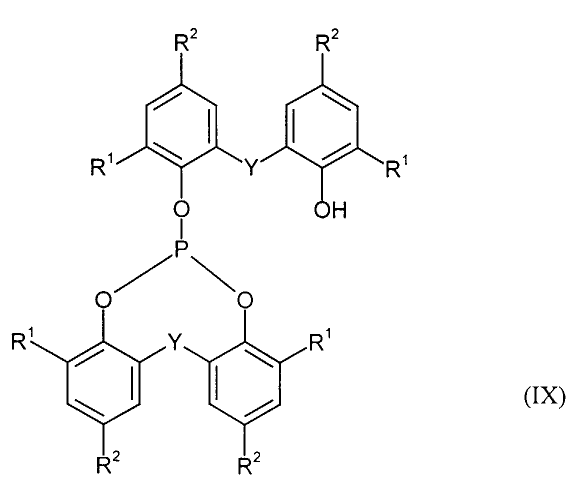 worin
R¹ und R² gleich oder verschieden sind und einen Alkylrest mit 1 bis 9 Kohlenstoffatomen, einen Cycloalkylrest mit 5 bis 6 Kohlenstoffatomen, einen Aralkylrest mit 7 bis 9 Kohlenstoffatomen oder einen Arylrest mit 6 bis 10 Kohlenstoffatomen und R¹ außerdem einen Wasserstoffrest und
Y eine einfache Bindung, ein Schwefelatom oder einen Rest -CHR³- darstellen, wobei
R³ für ein Wasserstoffatom, einen Alkylrest mit 1 bis 6 Kohlenstoffatomen, einen Cyclohexenylrest oder Cyclohexylrest steht.
und/oder der Phosphorigsäureester der Formel (IV) 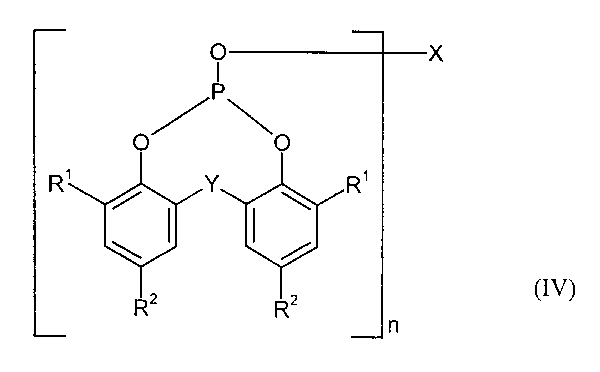 worin
R¹, R² und Y dieselbe Bedeutung wie oben haben und
X Wasserstoff, einen gegebenenfalls substituierten ein- bis vierbindigen geradkettigen oder verzweigten C₁-C₁₈-Alkylrest, C₇-C₁₈-Aralkylrest oder C₆-C₁₈-Arylrest bedeutet, wobei jeder der Reste olefinische Doppelbindungen und/oder Heteroatome wie N, O oder S enthalten kann und
n eine ganze Zahl von 1 bis 4 entsprechend der Bindigkeit von X bedeutet,
zur Stabilisierung von organischen Isocyanaten.

4. Verwendung der zyklichen Phosphorigsäureester der Formel (IX) und/oder der Formel (IV) nach Anspruch 3 zusammen mit sterisch gehinderten Phenolen.

5. Stabilisierte, organische Isocyanate, dadurch gekennzeichnet, daß die Isocyanate 10 bis 5 000 ppm Phosphorigsäureester der Formel (IX) und/oder der Formel (IV) gemäß Anspruch 3 enthalten.

6. Stabilisierte, organische Isocyanate nach Anspruch 5, dadurch gekennzeichnet, daß sie zusätzlich sterisch gehinderte Phenole enthalten.

7. Verfahren zur Herstellung von stabilisierten, organischen Isocyanaten gemäß Anspruch 5 und 6 durch Vermischen der Isocyanate mit Stabilisatoren und gegebenenfalls sterisch gehinderten Phenolen, dadurch gekennzeichnet, daß man als Stabilisatoren Phosphorigsäureester der Formel (IX) und/oder der Formel (IV) einsetzt.

8. Verwendung der stabilisierten, organischen Isocyanate gemäß einem der Ansprüche 5 oder 6 zur Herstellung von Polyurethankunststoffen.

## Claims

1. Cyclic phosphorous acid esters of the formula (I) 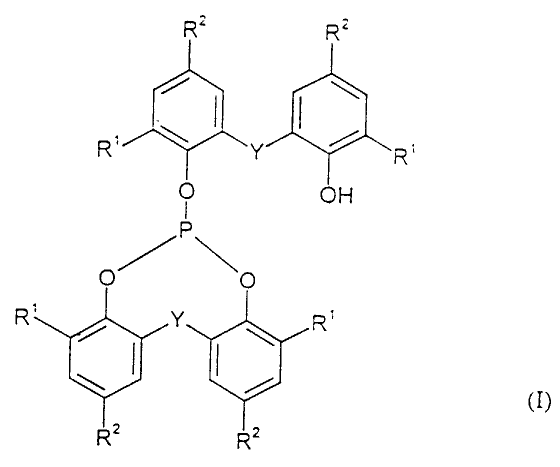 in which
R¹ and R² are different and represent an alkyl residue having 1 to 9 carbon atoms, a cycloalkyl residue having 5 to 6 carbon atoms, an aralkyl residue having 7 to 9 carbon atoms or an aryl residue having 6 to 10 carbon atoms and R¹ moreover represents a hydrogen residue and
Y represents a single bond, a sulfur atom or a residue -CHR³-, wherein
R³ denotes a hydrogen atom, an alkyl residue having 1 to 6 carbon atoms, a cyclohexenyl residue or a cyclohexyl residue.

2. Process for the production of the cyclic phosphorous acid esters of the formula (I) according to claim 1, characterised in that bisphenols of the formula (II) 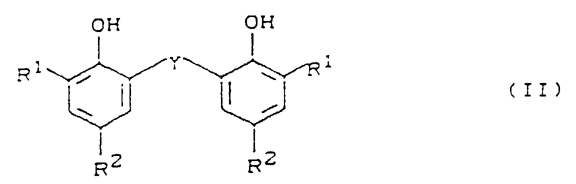 in which
R¹, R² and Y have the same meaning as above,
are reacted with phosphorous acid esters of the formula (III)
PW₃ (III)
in which
W means a halogen atom or OR⁷ where R⁷ = C₁ to C₁₅ alkyl residue or C₆ to C₁₀ aryl residue,
in a molar ratio of (II):(III) of 3 to 1.3:1, preferably of 2.8 to 1.5:1, particularly preferably of 2.5 to 1.7:1, very particularly preferably of 2.2 to 1.8:1.

3. Use of the cyclic phosphorous acid esters of the formula (IX) 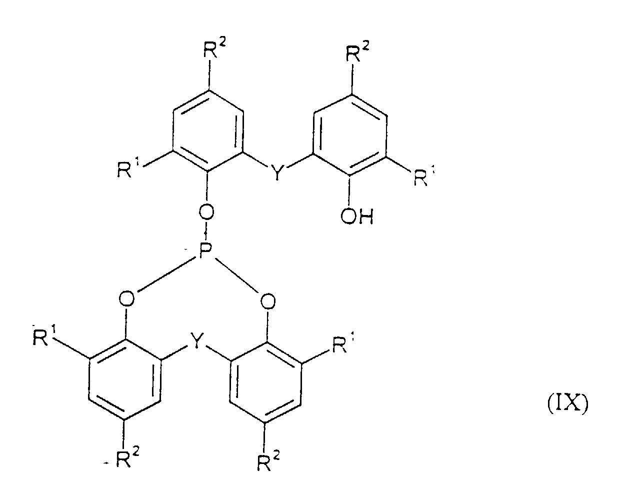 in which
R¹ and R² are identical or different and represent an alkyl residue having 1 to 9 carbon atoms, a cycloalkyl residue having 5 to 6 carbon atoms, an aralkyl residue having 7 to 9 carbon atoms or an aryl residue having 6 to 10 carbon atoms and R¹ moreover represents a hydrogen residue and
Y represents a single bond, a sulfur atom or a residue -CHR³-, wherein
R³ denotes a hydrogen atom, an alkyl residue having 1 to 6 carbon atoms, a cyclohexenyl residue or cyclohexyl residue,
and/or of the phosphorous acid esters of the formula (IV) 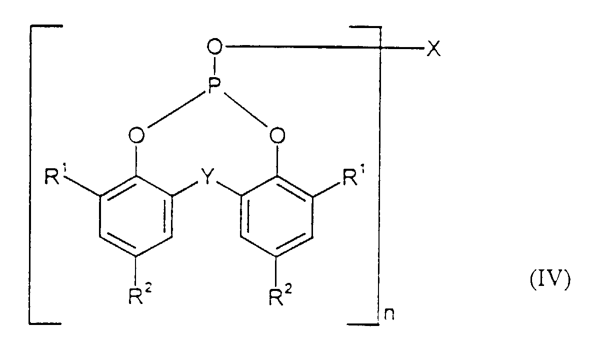 in which
R¹, R² and Y have the same meaning as above and
X means hydrogen, an optionally substituted mono- to tetracovalent, linear or branched C₁-C₁₈ alkyl residue, C₇-C₁₈ aralkyl residue or C₆-C₁₈ aryl residue, wherein each of the residues may contain olefinic double bonds and/or heteroatoms such as N, O or S and
n means an integer from 1 to 4 corresponding to the covalency of X,
for stabilising organic isocyanates.

4. Use of the cyclic phosphorous acid esters of the formula (IX) and/or of the formula (IV) according to claim 3 together with sterically hindered phenols.

5. Stabilised, organic isocyanates, characterised in that the isocyanates contain 10 to 5000 ppm of phosphorous acid esters of the formula (IX) and/or of the formula (IV) according to claim 3.

6. Stabilised, organic isocyanates according to claim 5, characterised in that they additionally contain sterically hindered phenols.

7. Process for the production of stabilised, organic isocyanates according to claim 5 and 6 by mixing the isocyanates with stabilisers and optionally sterically hindered phenols, characterised in that the stabilisers used are phosphorous acid esters of the formula (IX) and/or of the formula (IV).

8. Use of the stabilised, organic isocyanates according to one of claims 5 or 6 for the production of polyurethane plastics.

## Revendications

1. Esters cycliques de l'acide phosphoreux de formule (I) : 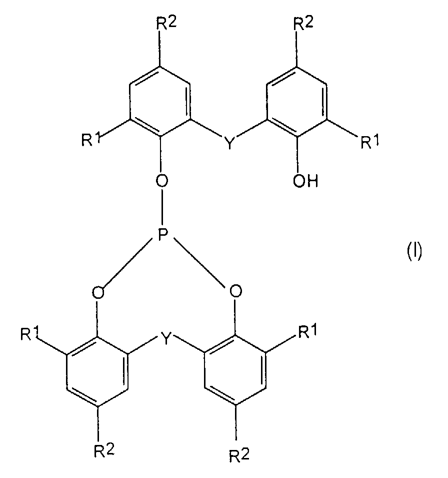 où
R¹ et R² sont différents et représentent un reste alcoyle ayant 1 à 9 atomes de carbone, un reste cycloalcoyle ayant 5 à 6 atomes de carbone, un reste aralcoyle ayant 7 à 9 atomes de carbone ou un reste aryle ayant 6 à 10 atomes de carbone et R¹ , également un reste hydrogène, et
Y représente une liaison simple, un atome de soufre ou un reste -CHR³-, où
R³ représente un atome d'hydrogène, un reste alcoyle ayant 1 à 6 atomes de carbone, un reste cyclohexényle ou un reste cyclohexyle.

2. Procédé de préparation d'esters cycliques de l'acide phosphoreux de formule (I) suivant la revendication 1, caractérisé en ce que des bisphénols de formule (II) : 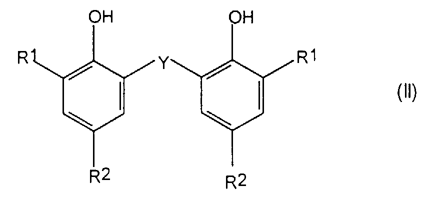 où
R¹, R² et Y ont la même signification que ci-dessus,
sont mis à réagir avec des esters de l'acide phosphoreux de formule (III)
PW₃ (III)
où
W signifie un atome d'halogène ou OR⁷ avec R⁷ = reste alcoyle en C₁ à C₁₅ ou reste aryle en C₆ à C₁₀ ;
en un rapport molaire (II)/(III) allant de 3 à 1,3/1, de préférence de 2,8 à 1,5/1, de manière particulièrement préférée de 2,5 à 1,7/1, de manière tout particulièrement préférée de 2,2 à 1,8/1.

3. Utilisation des esters cycliques de l'acide phosphoreux de formule (IX) : 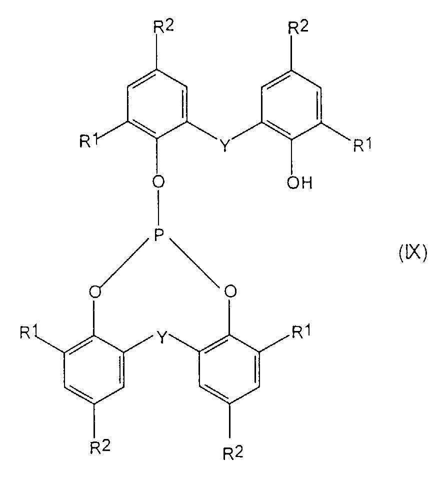 où
R¹ et R² sont identiques ou différents et représentent un reste alcoyle ayant 1 à 9 atomes de carbone, un reste cycloalcoyle ayant 5 à 6 atomes de carbone, un reste aralcoyle ayant 7 à 9 atomes de carbone ou un reste aryle ayant 6 à 10 atomes de carbone et R¹ , également un reste hydrogène, et
Y représente une liaison simple, un atome de soufre ou un reste -CHR³-, où
R³ représente un atome d'hydrogène, un reste alcoyle ayant 1 à 6 atomes de carbone, un reste cyclohexényle ou un reste cyclohexyle,
et/ou des esters de l'acide phosphoreux de formule (IV) : 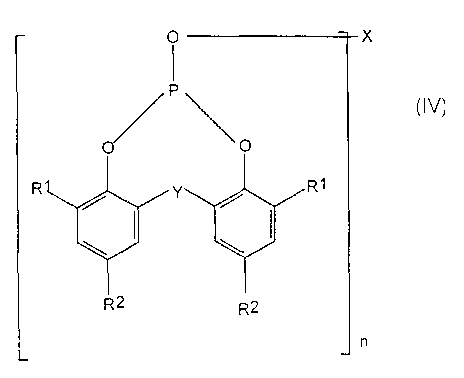 où
R¹, R² et Y ont la même signification que ci-dessus, et
X représente un atome d'hydrogène, un reste alcoyle en C₁-C₁₈ linéaire ou ramifié, un reste aralcoyle en C₇-C₁₈ ou un reste aryle en C₆-C₁₈, mono- à tétravalents, facultativement substitués, où chacun des restes peut contenir des doubles liaisons oléfiniques et/ou des hétéroatomes comme N, O ou S, et
n représente un nombre entier allant de 1 à 4, correspondant à la valence de X,
pour stabiliser des isocyanates organiques.

4. Utilisation des esters cycliques de l'acide phosphoreux de formule (IX) et/ou de formule (IV) suivant la revendication 3, avec des phénols stériquement encombrés.

5. Isocyanates organiques, stabilisés, caractérisés en ce qu'ils contiennent de 10 à 5000 ppm d'ester de l'acide phosphoreux de formule (IX) et/ou de formule (IV) suivant la revendication 3.

6. Isocyanates organiques, stabilisés, suivant la revendication 5, caractérisés en ce qu'ils contiennent en outre, des phénols stériquement encombrés.

7. Procédé de préparation d'isocyanates organiques, stabilisés, suivant les revendications 5 et 6, par mélange des isocyanates avec des stabilisants et facultativement, des phénols stériquement encombrés, caractérisé en ce que l'on met en oeuvre comme stabilisants, des esters de l'acide phosphoreux de formule (IX) et/ou de formule (IV).

8. Utilisation d'isocyanates organiques, stabilisés suivant l'une quelconque des revendications 5 ou 6, pour la préparation de matières plastiques en polyuréthanne.
